# NEW EUROPEAN PATENT SPECIFICATION

(11) **EP 0 659 773 B2**
(45) Date of publication and mention of the opposition decision: **05.12.2001**
(45) Mention of the grant of the patent: 19.08.1998
(21) Application number: 94309546.3
(22) Date of filing: 20.12.1994
(51) Int. Cl.: C08F 10/00, C08F 4/64, C08F 2/34

(54) **Production of polyolefins containing long chain branches by a gas phase process**
Herstellung von Polyolefinen mit lankettiger Verzweigung nach einem Gasphaseverfahren
Préparation de polyoléfines possédant des ramifications à chaîne longue par un procédé en phase gazeuse

(30) Priority: 21.12.1993 US 171272
(43) Date of publication of application: 28.06.1995
(73) Proprietor: Univation Technologies LLC, Houston, TX 77056 (US)
(72) Inventor: Karol, Frederick John, Belle Mead, NJ 08502 (US); Wasserman, Eric Paul, Hopewell, NJ 08525 (US); Kao, Sun-Chueh, Belle Road, NJ 08502 (US); Brady, Robert Converse, Morristown, NJ 07960 (US)
(74) Representative: Hayes, Adrian Chetwynd

(56) References cited:
- EP-A- 0 452 920
- EP-A- 0 593 083
- WO-A-93/08221

## Description

### Field

This invention relates to polyolefin manufacturing, and more particularly, to a gas phase process for introducing relatively long chain branches into polyethylene chains.

### Background

High density polyethylene becomes flexible and tough with the addition of short chain branches onto the otherwise linear backbone. Introduction of such branching also reduces the polymer's density. Polyethylene containing long chain branches also possesses good strength, and in addition, offers significant processing advantages in that 1) its viscosity under conditions of high shear is relatively low, permitting high processing rates under reasonable operating conditions, and 2) it often exhibits strain hardening, meaning that under conditions of high strain its viscosity increases, so that products made from polyethylene containing long chain branches, such as films, tend not to fail as they are being manufactured. Strain hardening is believed to be caused by intermolecular entanglements which lengthen the relaxation time of a polymer melt subjected to strain. Polymers that show strain hardening are better suited to certain types of extrusion apparatus than those that do not.

Branched polyethylene typically has been produced industrially by adding 1-butene or 1-hexene comonomer to the polymerization reactor and copolymerizing the comonomer with ethylene. There have also been reports of introducing branching into polyethylene without adding comonomers to the reaction mixture, by employing catalyst systems and reaction conditions that simultaneously form vinyl-terminated (terminally unsaturated) low molecular weight polymer molecules from ethylene monomer and copolymerize these with ethylene monomer to form the desired branched polyethylenes. See, for example, European Patent Application No. 443,686; E. A. Benham, et al., *Polymer Engineering and Science,* 28, 1469-1472 (1988); Beach and Kissin, *J. Polymer Science,* 22, 3027-3042 (1984); and C. Denger, et al., *Makromol*. *Chem*., *Rapid Commun*., 12, 697-701 (1991).

PCT Application No. WO 93/08221 of Dow describes manufacture of olefin polymers having long chain branching as opposed to the relatively short chain branching of the prior art, using certain constrained geometry metallocene catalysts that form relatively long vinyl-terminated hydrocarbon chains and copolymerize these with olefin monomer to form the desired branched polymers. This disclosure is limited, however, to liquid phase polymerizations using the particular catalysts disclosed. Although the Dow application states that it should be possible to produce polyethylenes containing long chain branching by a gas phase process if the correct catalysts and conditions are used, it does not provide such catalysts or reaction conditions. Moreover, such constrained geometry catalysts appear to be relatively sensitive to impurities in gas phase reactions, thereby decreasing their effectiveness.

It would be desirable to have catalysts and reaction conditions suitable for preparation of long chain branch-containing polyethylene in gas phase processes. Such catalysts and reaction conditions are the subject of the invention.

Introduction of long chain branches into polyethylene requires that vinyl-terminated long chain polymer molecules be copolymerized with ethylene monomer during polymerization. Such unsaturated long chain polymer molecules are not expected to be in the vapor state under the reaction conditions typically employed in gas phase processes, but rather, are expected to be solids or high boiling liquids having lower mobility. Accordingly, it was believed that serious difficulties might be encountered in attempting to introduce long chain branches into polyethylene in a gas phase polymerization, and that it might not be possible to accomplish this under industrially acceptable conditions. It has surprisingly now been found that long chain branches can be introduced into polyethylene in a gas phase process using certain bridged metallocene catalysts and appropriate reaction conditions.

### Summary of the Invention

The invention relates to a gas phase process for producing polyethylene containing long chain branches, which offers not only the good strength generally associated with branched polyethylenes, but also improved processability relative to polyethylenes that lack such long chain branches.

Accordingly, the present invention provides a process for producing polyethylene comprising:
contacting ethylene and optionally a higher alpha-olefin monomer containing 3 to 8 carbon atoms under polymerization conditions in the gas phase and at a temperature above 65°C, with an unsupported catalyst composition comprising, in solution:
   a) a bridged metallocene catalyst having at least two cyclic pi-bonded moieties in association with a metal atom, said cyclic pi-bonded moieties being joined together via a bridging linkage one or two atoms long; and
   b) an activating cocatalyst:
wherein the polyethylene produced contains a main chain and an average of up to 3 long chain branches per 1000 carbon atoms in the main chain, each branch being at least 18 carbon atoms in length.

### Description of the Drawing

Fig. 1 is a schematic of a fluidized bed gas phase polymerization reaction system.

Fig. 2 is a schematic of a stirred bed gas phase polymerization reaction system.

### Detailed Description of the Invention

According to the invention, polyethylene containing long chain branches at least 18 carbon atoms in length is produced. In particular, polyethylene containing an average of up to 3 of such long chain branches per 1000 carbon atoms in the main polymer chain is made. The term "polyethylene" herein includes both ethylene homopolymers, and ethylene copolymers made by copolymerizing ethylene monomer with one or more comonomers such as higher alpha-olefin monomers containing 3 to 8 carbon atoms.

The process for forming polyethylene having up to 3 long chain branches per 1000 carbon atoms in the polyethylene backbone employs a catalyst composition comprising at least one bridged metallocene catalyst and at least one activating cocatalyst capable of activating the bridged metallocene catalyst. The bridged metallocene catalyst is capable of 1) polymerizing ethylene monomer into polyethylene, 2) forming at least some vinyl-terminated polymer molecules having chain lengths of at least 20 carbon atoms to serve as precursors of the long chain branches, and 3) copolymerizing these vinyl-terminated polymer molecules with ethylene monomer and any comonomers employed to form the branched polyethylene product. The bridged metallocene catalyst has a ratio of reactivity for polymerization of ethylene to reactivity for copolymerization of ethylene and vinyl-terminated polymer molecules in the range of 1 to 20, preferably in the range of 1 to 10. The catalyst composition is effective to incorporate an average of up to 3 long chain branches per 1000 carbon atoms in the main chain of the polyethylene.

The catalyst composition may contain a single bridged metallocene catalyst or multiple bridged metallocene catalysts. In the case of a single bridged metallocene catalyst, this catalyst must serve the functions of polymerization, formation of vinyl-terminated polymer molecules, and copolymerization. In the case of multiple bridged metallocene catalysts, generally one bridged metallocene catalyst carries out polymerization of ethylene monomer and formation of the vinyl-terminated polymer molecules, and another carries out copolymerization of ethylene monomer and the vinyl-terminated polymer molecules.

The bridged metallocene catalyst contains at least two cyclic pi-bonded moieties in association with a metal atom. The cyclic pi-bonded moieties are joined together by a bridging linkage that is one or two atoms long. Preferably, the metal atom is a group IV(B) metal of the Periodic Table. More preferably, the metal atom is Ti, Zr, or Hf atom, most preferably a Zr atom.

The bridged metallocene catalyst is especially effective for incorporating long chain branches, i.e., containing at least about 18 carbon atoms, into polyethylene. Although the invention is not bound by any particular theory, it is believed that the bridging linkage connecting the pi-bonded moieties creates greater gap aperture at the metal center of the bridged metallocene catalyst. This greater openess at the metal center allows the low mobility, vinyl-terminated polymer molecules to reach more easily the catalytically active metal atom and react.

In addition, the bridged metallocene catalyst advantageously is relatively insensitive to impurities in the polymerization process, and therefore maintains good productivity even in the presence of low levels of such catalyst poisons as moisture, oxygen, carbon dioxide and acetylene, for example. Other metallocene catalysts, such as the contrained geometry catalysts of PCT Application No. WO 93/08221, tend to be more susceptible to such impurities, even in minimal amounts.

Preferably, the bridged metallocene catalyst has the general formula: 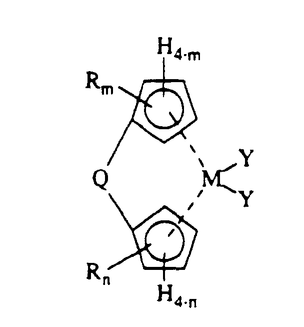 wherein:
Q is a bridging linkage selected from
   R'₂C〈, R'₂Si〈, R'₂Ge〈, and -C₂R'₄-
wherein each R' moiety is independently H or an alkyl group, or two R' moieties are joined to form a ring structure. Preferably, when an R' moiety is an alkyl group, it contains 3 to 8 carbon atoms, and when two R' moieties are joined to form a ring structure with the atom or atoms to which they are respectively attached, a 5 or 6-membered ring is formed. The subscripts m and n are each 0, 1, 2, 3, or 4, and the sum of m and n is preferably 2 to 6. The metal M is a Ti, Zr, or Hf atom, preferably Zr. Each Y is independently H, an alkyl group, or a halogen atom.

The cyclic pi-bonded moieties may bear one or more substituents R. Each R moiety is independently an alkyl, cycloalkyl, alkenyl, cycloalkenyl, phenyl, alkyl-substituted phenyl, or a phenyl-substituted alkyl group, or two adjacent R groups on a given ring are joined to form a second ring. Preferably, each R moiety is independently an alkyl or cycloalkyl group of 3 to 8 carbon atoms, an alkenyl group of 2 to 8 carbon atoms, a cycloalkenyl group of 5 to 8 carbon atoms, phenyl, an alkyl-substituted phenyl group in which the alkyl group contains 3 to 8 carbon atoms, a phenyl-substituted alkyl group in which the alkyl portion contains 1 to 4 carbon atoms, or two adjacent R groups on a given ring are joined and together with the carbon atoms to which they are respectively attached form a saturated or unsaturated 4, 5, or 6-membered ring.

The following compounds are illustrative but non-limiting examples of useful bridged metallocene catalysts:
*rac*-ethylenebis(indenyl)zirconium dichloride;
*rac*-ethylenebis(4,5,6,7-H-tetrahydroindenyl)zirconium dichloride;
*rac*-dimethylsilylenebis(indenyl )zirconium dichloride;
*rac*-dimethylsilylenebis(4,5,6,7-H-tetrahydroindenyl)zirconium dichloride;
*rac*-ethylenebis(indenyl)zirconium dimethyl;
*rac*-ethylenebis(4,5,6,7-H-tetrahydroindenyl)zirconium dimethyl;
*rac*-dimethylsilylenebis(indenyl)zirconium dimethyl;
*rac*-dimethylsilylenebis(4,5,6,7-H-tetrahydroindenyl)zirconium dimethyl;
*rac*-ethylenebis(2-methylindenyl)zirconium dichloride;
*rac*-dimethylsilylenebis(2-methylindenyl)zirconium dichloride;
*rac*-ethylenebis(2-methylindenyl )zirconium dimethyl;
*rac*-dimethylsilylenebis(2-methylindenyl )zirconium dimethyl;
isopropylidene(cyclopentadienyl)(fluorenyl)zirconium dichloride;
diphenylmethylene(cyclopentadienyl)(fluorenyl)zirconium dichloride;
isopropylidene(cyclopentadienyl)(fluorenyl)zirconium dimethyl;
diphenylmethylene(cyclopentadienyl)(fluorenyl)zirconium dimethyl; and
dimethylsilylbis(cyclopentadienyl)zirconium dichloride.

The bridged metallocene catalyst may be made by one of several methods. For example, see A. Razavi and J. Ferrara, *J. Organomet. Chem*., 435, 299 (1992) and K. P. Reddy and J. L. Petersen, *Organometallics*, 8, 2107 (1989). One method comprises first reacting two equivalents of an optionally substituted cyclopentadiene with a metallic deprotonating agent such as an alkyllithium or potassium hydride in an organic solvent such as tetrahydrofuran, followed by reaction of this solution with a solution of one equivalent of a doubly-halogenated compound such as dichlorodimethylsilane. The resulting ligand is then isolated by conventional methods known to those skilled in the art (such as distillation or liquid chromatography), reacted with two equivalents of a metallic deprotonating agent as above, and then reacted with one equivalent of a tetrachloride of a group IV(B) metal, optionally coordinated with donor ligand molecules such as tetrahydrofuran, in organic solvent. The resulting bridged metallocene catalyst is isolated by methods known to those skilled in the art such as recrystallization or sublimation.

Alternatively, the bridged metallocene catalyst may be produced by first reacting one equivalent of an optionally substituted cyclopentadiene with one equivalent of metallic deprotonating agent in an organic solvent as above, followed by reaction with one equivalent of a molecule containing an unsaturated five-carbon ring to which is attached an exocyclic group susceptible to nucleophilic attack, such as a dialkylfublene. The reactive solution is next quenched with water and the ligand is isolated by conventional methods. One equivalent of the ligand is next reacted with two equivalents of metallic deprotonating agent as above and the resulting solution is in turn reacted with one equivalent of a tetrachloride of a group IV(B) metal optionally coordinated with donor ligand molecules such as tetrahydrofuran, in organic solvent. The resulting bridged metallocene catalyst is isolated by methods known to those skilled in the art.

The activating cocatalyst may be one of the following: (a) branched or cyclic oligomeric poly(hydrocarbylaluminum oxide)s which contain repeating units of the general formula -(Al(R")O)-, where R" is hydrogen, an alkyl radical containing from 1 to about 12 carbon atoms, or an aryl radical such as a substituted or unsubsuituted phenyl or naphthyl group; (b) ionic salts of the general formula [A⁺][BR*₄⁻], where A⁺ is a cationic Lewis or Bronsted acid capable of abstracting an alkyl, halogen, or hydrogen from the bridged metallocene catalyst, B is boron, and R* is a substituted aromatic hydrocarbon, preferably a perfluorophenyl radical; and (c) boron alkyls of the general formula BR*₃, where R* is as defined above.

Preferably, the activating cocatalyst is branched or cyclic oligomeric poly(hydrocarbylaluminum oxide). More preferably, the activating cocatalyst is an aluminoxane such as methylaluminoxane (MAO) or modified methylaluminoxane (MMAO).

Aluminoxanes are well known in the art and comprise oligomeric linear alkyl aluminoxanes represented by the formula: 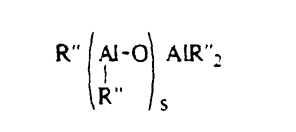 and oligomeric cyclic alkyl aluminoxanes of the fomula: 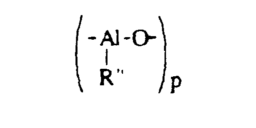 wherein s is 1-40, preferably 10-20; p is 3-40, preferably 3-20; and R" is an alkyl group containing 1 to 12 carbon atoms, preferably methyl or an aryl radical such as a substituted or unsubstituted phenyl or naphthyl radical.

Aluminoxanes may be prepared in a variety of ways. Generally, a mixture of linear and cyclic aluminoxanes is obtained in the preparation of aluminoxanes from, for example, trimethylaluminum and water. For example, an aluminum alkyl may be treated with water in the form of a moist solvent. Alternatively, an aluminum alkyl, such as trimethylaluminum, may be contacted with a hydrated salt, such as hydrated ferrous sulfate. The latter method comprises treating a dilute solution of trimethylaluminum in, for example, toluene with a suspension of ferrous sulfate heptahydrate. It is also possible to form methylaluminoxanes by the reaction of a tetraalkyl-dialuminoxane containing C₂ or higher alkyl groups with an amount of trimethylaluminum that is less than a stoichiometric excess. The synthesis of methylaluminoxanes may also be achieved by the reaction of a trialkyl aluminum compound or a tetraalkyldialuminoxane containing C₂ or higher alkyl groups with water to form a polyalkyl aluminoxane, which is then reacted with trimethylaluminum. Further modified methylaluminoxanes, which contain both methyl groups and higher alkyl groups, may be synthesized by the reaction of a polyalkyl aluminoxane containing C₂ or higher alkyl groups with trimethylaluminum and then with water as disclosed in, for example, U.S. Patent No. 5,041,584.

The amount of bridged metallocene catalyst and activating cocatalyst usefully employed in the catalyst composition may vary over a wide range. When the activating cocatalyst is a branched or cyclic oligomeric poly(hydrocarbylaluminum oxide), the mole ratio of aluminum atoms contained in the poly(hydrocarbylaluminum oxide) to metal atoms contained in the bridged metallocene catalyst is generally in the range of from 2:1 to 100,000:1, preferably in the range of from 10:1 to 10,000:1, and most preferably in the range of from 50:1 to 2,000:1. When the activating cocatalyst is an ionic salt of the formula [A⁺][BR*₄⁻] or a boron alkyl of the formula BR*₃, the mole ratio of boron atoms contained in the ionic salt or the boron alkyl to metal atoms contained in the bridged metallocene catalyst is generally in the range of from 0.5:1 to 10:1, preferably in the range of from 1:1 to 5:1.

In addition to the bridged metallocene catalyst and the activating cocatalyst, the catalyst composition may optionally contain one or more second catalysts. These second catalysts include for example any Ziegler-Natta catalysts containing a metal from groups IV(B), V(B), or VI(B) of the Periodic Table, or non-bridged metallocene catalysts containing group III(B) to VIII metals. Any such second catalyst must generate vinyl unsaturation and be compatible with the bridged metallocene catalyst. Suitable activators for Ziegler-Natta and non-bridged metallocene catalysts are well known in the art and may also be included in the catalyst composition.

In a preferred embodiment of the invention, the catalyst composition further comprises a second catalyst that is a non-bridged metallocene catalyst of the formula:

(C₅Rₙ)_{y}(C₅Rₘ)MY'_{(x-y-1)}

wherein M is a metal from groups IIIB to VIII of the Periodic Table; (C₅Rₙ) and (C₅Rₘ) are the same or different and are cyclopentadienyl or substituted cyclopentadienyl groups bonded to M; each R is the same or different and is hydrogen or a hydrocarbyl radical such as alkyl, alkenyl, aryl, alkylaryl, or arylalkyl radical containing from 1 to 20 carbon atoms, or two carbon atoms are joined together to form a C₄-C₆ ring; each Y' is a hydrocarbyl radical such as aryl, alkyl, alkenyl, alkylaryl, or arylalkyl radical having from 1-20 carbon atoms, hydrocarboxy radical having from 1-20 carbon atoms, or halogen; n and m are each 0, 1, 2, 3, or 4; y is 0, 1, or 2; x is 1, 2, 3, or 4 depending upon the valence state of M; and n-y ≥ 1.

Examples of such non-bridged metallocene catalysts include:
bis(cyclopentadienyl)zirconium dichloride;
bis(n-butylcyclopentadienyl)zirconium dichloride;
bis(methylcyclopentadienyl )zirconium dichloride;
bis(pentamethylcyclopentadienyl)zirconium dichloride;
bis(methylcyclopentadienyl)zirconium dimethyl;
bis(cyclopentadienyl)hafnium dichloride;
(cyclopentadienyl)(9-fluorenyl)zirconium dichloride;
bis(1-indenyl)zirconium dichloride;
bis(4,5,6,7-H-tetrahydroindenyl)zirconium dichloride; and
cyclopentadienylzirconium trichloride.

The catalyst composition used in the present invention is unsupported and in the form of a solution.

The polymerization process may be conducted in the gas phase in a stirred or fluidized bed reactor as described below, by contacting a gaseous stream of ethylene monomer and optionally one or more C₃ to C₈ comonomers with an effective amount of catalyst composition at a temperature and a pressure sufficient to initiate polymerization. The process may be carried out in a single reactor or in two or more reactors in series. The process may be conducted substantially in the absence of catalyst poisons such as moisture, oxygen, carbon dioxide, and acetylene, since only minor amounts (i.e. ≤2 ppm) of such materials have been found to affect the polymerization adversely.

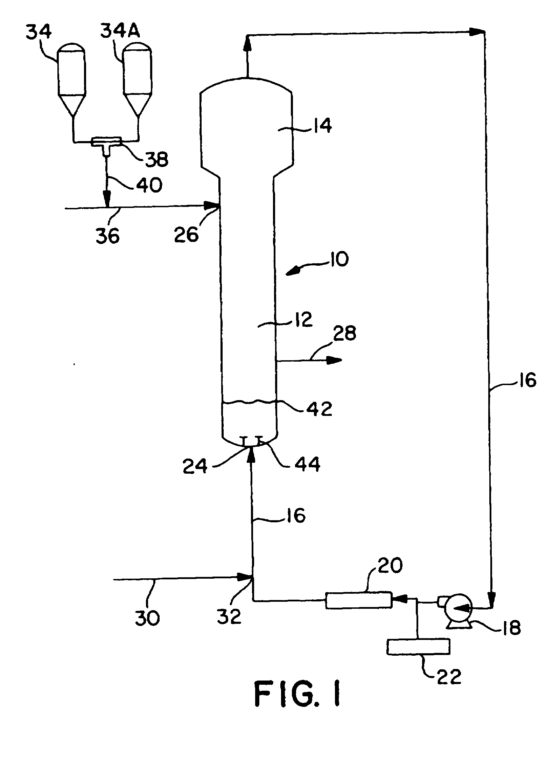

A suitable fluidized bed reaction system is illustrated in Figure 1. This reaction system comprises a fluidized bed reactor 10 having a reaction zone 12 and a velocity reduction zone 14. A gas recycle loop 16 which includes a compressor 18 and a heat exchanger 20 is located between the top of the reactor and its bottom. A gas analyzer 22 is also provided in the gas recycle loop to aid in controlling gas composition in the reactor. The reactor possess a base inlet 24, a side inlet 26, and an outlet 28. Line 30 carries the gas feed into recycle loop 16 at point 32 for its subsequent introduction into the reactor through base inlet 24. One or more catalyst/cocatalyst reservoirs 34, 34A are connected to the reactor via feed line 36 which connects to side inlet 26. These reservoirs 34, 34A are preferably connected at mixing tee 38, the outlet of which is connected to feed line 36 via line 40. Alternatively, the reservoirs 34, 34A may be separately connected to reactor 10. The reactor 10 contains a gas distribution plate 42 near its base in the vicinity of outlet 28. Preferably, the reactor also includes a fluid flow deflector 44 at base inlet 24 to prevent polymer particles from settling out and agglomerating at the inlet.

The polymerization reaction is run by injecting monomer(s) and recycle gas into the reactor via base inlet 24, injecting catalyst composition via side inlet 26, and causing polymerization to occur in reaction zone 12. The gas flow rate must be high enough to keep the particles of polymer that form suspended. Product is withdrawn through outlet 28.

Reaction zone 12 comprises a bed of growing polymer particles, formed polymer particles, and a minor amount of catalyst composition, fluidized by a continuous flow of polymerizable and modifying gaseous components in the form of make-up feed and recycle gas through the reaction zone. To maintain proper operation of the fluidized bed, mass gas flow through the bed must be above the minimum flow required for fluidization, preferably from 1.5 to 10 times G_{mf} and more preferably from 3 to 6 times G_{mf}. "G_{mf}" is used herein in its accepted form as the abbreviation for the minimum mass gas flow required to achieve fluidization. C.Y. Wen and Y.H. Yu, "Mechanics of Fluidization", *Chemical Engineering Progress Symposium Series,* 62, 100-111 (1966).

It is essential that the bed always contain polymer particles to prevent the formation of localized "hot spots" and to distribute the catalyst composition throughout the reaction zone. On start up, the reaction zone is usually charged with a base of polymer particles before gas flow is initiated. Such particles may be identical to the polyethylene to be formed or different therefrom. When different, they are withdrawn with the desired polyethylene particles as the first product. Eventually, a fluidized bed of the desired polyethlyene particles supplants the start up bed.

Fluidization is achieved by a high rate of gas recycle to and through the bed, typically on the order of about 50 times the rate of feed of make-up gas. The fluidized bed has the general appearance of a dense mass of moving particles in possibly free-vortex flow as created by the percolation of gas through the bed. The pressure drop through the bed is equal to or slightly greater than the mass of the bed divided by the cross-sectional area.

To insure complete fluidization, the recycle gas and, where desired, part of the make-up gas are returned to the reactor at base inlet 24 below the bed. Gas distribution plate 42 above the point of return aids in fluidizing the bed.

Make-up gas is fed to the bed at a rate equal to the rate at which particulate polyethylene product is withdrawn. The composition of the make-up gas is determined by a gas analyzer 22 positioned in the recycle loop. Gas analyzer 22 determines component deficiency in the gas being recycled and the composition of the make-up gas is adjusted accordingly to maintain an essentially steady state gaseous composition within the reaction zone.

The portion of the gas stream that does not react in the bed constitutes the recycle gas, which is removed from the polymerization zone, preferably by passing it into a velocity reduction zone 14 above the bed where entrained particles are given an opportunity to drop back into the bed.

The recycle gas is then compressed in compressor 18 and passed through heat exchanger 20 wherein it is cooled before being returned to the bed. By constantly removing heat of reaction, no noticeable temperature gradient appears to exist within the upper portion of the bed. A temperature gradient does exist in the bottom 6 to 12 inch (15.2 to 20.5 cm) of bed, between the temperature of the inlet gas and the temperature of the remainder of the bed. Thus it has been observed that the bed acts quickly to adjust the temperature of the recycle gas above this lower 15.2 to 30.5 cm (6 to 12 inch) bed zone to make it conform to the temperature of the bed thereby maintaining itself at an essentially constant temperature under steady state conditions. The recycle gas is returned to the reactor through base inlet 24 and to the fluidized bed through distribution plate 42.

Distribution plate 42 plays an important role in the operation of the reactor. The fluidized bed contains growing and formed polyethylene particles as well as catalyst composition particles. As the polymer particles are hot and possibly active, they must be prevented from settling, for if a quiescent mass is allowed to form, any active catalyst contained therein may continue to react and cause fusion. Diffusing recycle gas through the bed at a rate sufficient to maintain fluidization at the base of the bed is, therefore, important. Distribution plate 42 serves this purpose and may be a screen, slotted plate, perforated plate, a plate of the bubble cap type or the like. The elements of the plate may all be stationary, or the plate may be of the mobile type disclosed in U.S. Pat. No. 3,298,792. Whatever its design, it must diffuse the recycle gas through the particles at the base of the bed to keep them in a fluidized condition, and also serve to support a quiescent bed of resin particles when the reactor is not in operation. The mobile elements of the plate may be used to dislodge any polymer particles entrapped in or on the plate.

The bridged metallocene catalyst, the activating cocatalyst and the second catalyst, if any, used in the fluidized bed are preferably separately stored for service in a reservoirs 34 and 34A under a nitrogen blanket, and premixed to form the catalyst composition before being injected into the reactor. They can also be injected as separate streams and the catalyst composition formed in the reactor. In any case, continuous or intermittent injection techniques may be employed. Alternatively, the bridged metallocene catalyst, the activating cocatalyst and any second catalyst can be premixed and the resulting catalyst composition can be isolated and subsequently dissolved in a suitable solvent and injected into the reactor, though this is not a preferred embodiment of the invention.

The catalyst composition is injected into the bed at a rate equal to its consumption, at side inlet 26 which is above the distribution plate 42. Preferably, the catalyst composition is injected at a point located about 1/4 to 3/4 up the side of the bed. Injecting the catalyst composition at a point above the distribution plate is an important feature of the polymerization process conducted in a fluidized bed. Since the catalyst composition is highly active, injection into the area below the distribution plate could cause polymerization to begin there and eventually cause plugging of the distribution plate. Injection into the bed, instead, aids in distributing the catalyst composition throughout the bed and tends to preclude the formation of localized spots of high catalyst composition concentration which may result in the formation of hot spots.

Under a given set of operating conditions, the fluidized bed is maintained at essentially a constant height by withdrawing a portion of the bed as product at a rate equal to the rate of formation of polyethylene product. Since the rate of heat generation is directly related to polyethylene product formation, a measurement of the temperature rise of the gas across the reactor (the difference between inlet gas temperature and exit gas temperature) is determinative of the rate of particulate polyethylene formation at a constant gas velocity.

The particulate polyethylene product is preferably continuously withdrawn at outlet 28 at or close to the distribution plate 42 and in suspension with a portion of the gas stream which is preferably vented before the particles settle to preclude further polymerization and sintering when the particles reach their ultimate collection zone. The suspending gas may also be used to drive the product of one reactor to another reactor in the event staged reactors are employed.

The fluidized bed reactor is preferably equipped with an adequate venting system to allow venting the bed during start up and shut down. The reactor does not require the use of stirring means and/or wall scrapping means.

The feed stream of gaseous monomer, with or without inert gaseous diluents, is fed into the reactor at a space time yield of about 2 to 10 pounds/hour/cubic foot of bed volume (32 to 160 kg/hr/cubic meter).

The process may also be conducted in a continuous or batch stirred bed reactor that mechanically fluidizes the particles of polyethylene produced. As with the fluidized bed reactor, gaseous ethylene monomer and optionally comonomers are contacted in the reactor with catalyst composition. The stirred bed reactor may consist of, for example, a cylindrical section swept by a set of impellers that agitate the growing and formed polymer particles in a mixture of reactive gaseous monomer and inert gaseous diluent, as well as a section that separates entrained particles from the gas stream, which is circulated by means of a blower. In a preferred mode of initiating operation of such a reactor, catalyst composition dissolved in an inert fluid is injected as a mist into the cylindrical section, which contains a small amount of quenched and passivated polymer particles.

When using either a fluidized bed reactor or a stirred bed reactor, inert gas such as nitrogen or inert fluid such as isopentane may be used to carry the catalyst into the bed.

Also, in the case either a fluidized bed or a stirred bed reactor the production rate of the bed may be controlled by the rate of catalyst composition injection. The productivity of the bed may be increased by increasing the rate of catalyst composition injection and decreased by reducing the rate of catalyst composition injection.

Since any change in the rate of the catalyst composition injection will change the rate of heat generation in the reaction, the temperature of the recycle gas may be adjusted upwards or downwards to accommodate changes in rate of heat generation. This insures an essentially constant temperature will be maintained in the bed. Complete instrumentation of both the fluidized bed or stirred bed and the recycle gas cooling system is, of course, necessary to detect any temperature change in the bed so as to enable the operator to make suitable adjustments in the temperature of the recycle gas.

The polymerization process is carried out at a temperature above 65 °C. Preferably, temperatures of 75 °C to 110°C are used. It is believed that such minimum temperatures are necessary to render the vinyl-terminated polymer molecules mobile enough to participate in creating long chain branches on the polyethylene backbone.

The polymerization process may be operated at pressures of up to 1000 psi (6894 kPa) and is preferably operated at a pressure of from 150 to 350 psi (1034 to 2413 kPa), with operation at the higher pressures in such ranges favoring heat transfer since an increase in pressure increases the unit volume heat capacity of the gas.

It is also an important aspect of the process that at a constant reactor pressure variations in ethylene partial pressure effect the productivity of the catalyst composition and the rate of the reaction. Thus the ethylene partial pressure should be controlled within the range of 80 to 300 psi (551 to about 2068 kPa) with a preferred range of 120 to 250 psi (827 to about 1723 kPa).

Conventional additives may be included in the process, provided they do not interfere with the operation of the catalyst composition in forming vinyl-terminated polymer molecules and copolymerizing these with ethylene monomer to form the desired branched polyethylene.

When hydrogen is used as a chain transfer agent in the process, it is normally used in amounts varying between 0.001 to 10 moles of hydrogen per mole of ethylene plus comonomer. Also, as desired for temperature control of the system, any gas inert to the catalyst composition and reactants can also be present in the gas stream.

Organometallic compounds may be employed as scavenging agents for poisons to increase the catalyst activity. Examples of these compounds are metal alkyls, preferably aluminum alkyls, most preferably triisobutylaluminum. Use of such scavenging agents is well known in the art.

### Examples

### Glossary

Density in g/cc was determined in accordance with ASTM 1505, based on ASTM D-1928, procedure C, plaque preparation. A plaque is made and conditioned for one hour at 100°C to approach equilibrium crystallinity, measurement for density was then made in a density gradient column.

MAO is a solution of methyl aluminoxane in toluene, approximately 1.8 molar in aluminum, obtained from Ethyl Corporation (Baton Rouge, LA).

MFR stands for melt flow ratio, which is the ratio of Flow Index to Melt Index. It is related to the molecular weight distribution of a polymer.

Ml stands for Melt Index, reported as grams per 10 minutes, determined in accordance with ASTM D-1238, condition E, at 190°C. The Flow Index, reported as grams per 10 minutes, is determined in accordance with ASTM D-1238, condition F, and was measured at ten times the weight used in the Melt Index test.

MMAO is a solution of modified methyl aluminoxane containing isobutyl groups in isopentane, approximately 2.3 molar in aluminum, obtained from Akzo Chemicals Inc. (Chicago, IL) as "MMAO-3A".

PDI stands for polydispersity index, which is equivalent to Molecular Weight Distribution (M_{w}/Mₙ). PDI was determined by gel permeation chromatography using crosslinked polystyrene columns; pore size sequence: 1 column less than 1000 Å (1 Å = 0.1 nm), 3 columns of mixed 5 x 10⁷ Å; 1,2,4-trichlorobenzene solvent at 140°C with refractive index detection.

### Preparation of Catalyst A

Preparation of a bridged metallocene catalyst, dimethylsilylbis(cyclopentadienyl)zirconium dichloride (DMSBCZ, (CH₃)₂Si(C₅H₄)₂ZrCl₂), was carried out as follows. A 500 mL round-bottom flask equipped with magnetic stirbar and addition funnel was charged under nitrogen with 54 mL of sodium cyclopentadienylide solution (2.0 mol L⁻¹ in tetrahydrofuran, 108 mmol) and an additional 100 mL tetrahydrofuran (THF) previously distilled from sodium/benzophenone The flask was cooled in a dry ice/acetone bath. A solution of 6.4 mL dichlorodimethylsilane (53 mmol) in 50 mL of THF was added dropwise via addition funnel to the flask. The solution was allowed to warm to ambient temperature while stirring for one hour. The pink slurry was then cooled again in a dry-ice/acetone bath and 44 mL n-butyllithium (2.5 mol L⁻¹ in hexanes, 110 mmol) were added dropwise via addition funnel. The solution was allowed to warm to ambient temperature while stirring an additional hour. This light golden slurry was then cooled in an ice/water bath. A mixture of zirconium tetrachloride bis(THF) (20.2 g, 54 mmol, previously prepared according to the procedure given by Manzer in *Inorganic Syntheses,* 21, 135 (1982)) was then transferred into this slurry. After ca. 16 h of stirring at room temperature, the slurry was reduced in vacuo to a mustard-colored solid, which was recrystallized from methylene chloride to yield 0.92 g (5 %) of dimethylsilylbis(cyclopentadienyl)zirconium dichloride. 1H nmr resonances (in CD₂Cl₂) (d): 6.942 (t), J = 2.4 Hz; 6.005 (t), J = 2.4 Hz; 0.759(s). ¹³C {¹H} nmr resonances (d): 128.95, 114.81, 109.98, -5.04.

### Preparation of Catalyst B

Synthesis of another bridged metallocene catalyst, diphenylmethylene(cyclopentadienyl )(fluorenyl )zirconium dichloride (DPZ, (C₆H₅)₂C(C₅H₄)(C₁₃H₈)ZrCl₂), was carried out as follows. A 1 L round-bottom flask, equipped with stirbar, one 250 mL addition funnel, and one 125 mL graduated addition funnel, was charged with 14.3 g fluorene (86 mmol) and 250 mL THF under nitrogen. While keeping the flask in an ice/water bath, 55 mL n-butyllithium (1.6 mol L⁻¹ in hexanes, 88 mmol) were added via graduated addition funnel. The resulting dark red solution was stirred for 2 h at ambient temperature. A solution of 19 g of diphenylfulvene (82 mmol) in 200 mL THF was then added via the other funnel, and the mixture was allowed to stir for ca. 16 h. The black solution was quenched with 300 mL saturated NH₄Cl/ H₂O. The organic fraction was collected and reduced in vacuo to an orange cake which was washed with water, methanol, and diethyl ether. The solid was vacuum dried ca. 16 h to yield (diphenyl(fluorenyl)methyl)cyclopentadiene, an off-white solid (16.2 g), which was slurried in 200 mL THF under nitrogen. To this sample, which was cooled in an ice/ water bath, were added 57 mL methyllithium (1.4 mol L⁻¹ in diethyl ether, 80 mmol). The red solution was allowed to stir at ambient temperature for 3 h, then was reduced in vacuo to a dark red material, which was stirred with 200 mL hexane for ca. 16 h. By filtering this mixture on a medium frit under argon and washing with hexane then drying in vacuo for 3 h at ambient temperature, dilithium diphenylmethylene-(cyclopentadienylide)(fluorenylide), an orange powder, was obtained. To a slurry of this salt in 200 mL hexane were added 8.77 g zirconium tetrachloride (38 mmol), and the resulting slurry was stirred for ca. 64 h. The solid was then separated from the supernatant and washed twice with hexane by centrifugation, and then was dried in vacuo for 4.75 h at ambient temperature. Yield: 22.7 g of diphenylmethylene(cyclopentadienyl)(fluorenyl)zirconium dichloride with two equivalents of lithium chloride, 43 % yield (based on diphenylfulvene). ¹H nmr (d): 7.87 (d), J = 8.4 Hz; 7.53 (d of d), J = 17, 8.0 Hz; 7.32 (t), 7.3 Hz; 7.16 (br s); 7.06 (t of d), J = 1.3, 7.6 Hz; 7.00 (t of d), J = 1.6, 7.6 Hz; 6.93 (t of t), J = 1.3, 7.3 Hz; 6.75 (t of d), J = 1.1, 8.7 Hz; 6.41 (d), J = 8.8 Hz; 6.13 (t), J = 2.7 Hz; 5.49 (t), J = 2.7 Hz; 3.58 (br s).

### Polymerization Procedure

In Examples 1 to 7, polyethylene was prepared in a stirred bed, horizontally mixed reactor with various catalyst compositions. The Table below summarizes the polymerization conditions for each example.

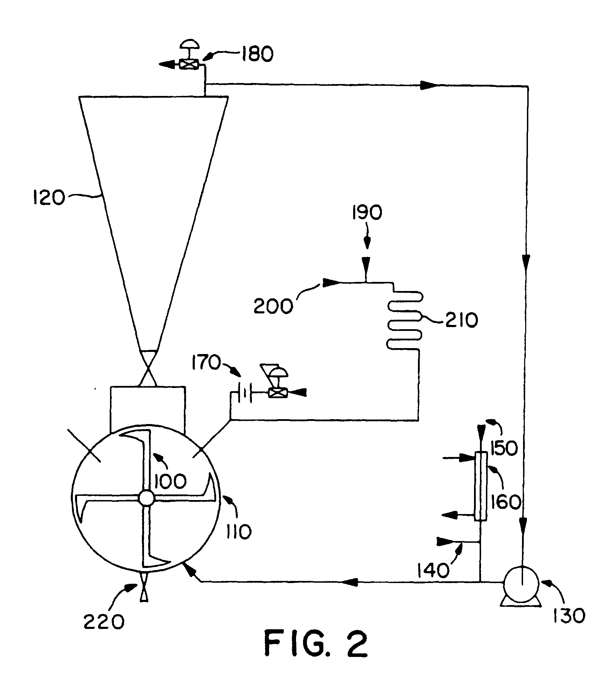

Figure 2 depicts the horizontally mixed reactor system used in Examples 1 to 7. The reactor was a two-phase (gas/solid) stirred bed, back-mixed reactor. A set of four "plows" 100 were mounted horizontally on a central shaft rotating at 200 rpm to keep the particles in reactor 110 mechanically fluidized. The reactor cylinder swept by these plows measured 40.6 cm (16 in.) long by 39.7 cm (15.6 in.) in diameter, resulting in a mechanically fluidizable volume of 46 liters (1.6 ft³). The gas volume, larger than the mechanically fluidizable volume due to the vertical cylindrical chamber, totaled 54.6 liters (1.93 ft³). A disengager vessel 120 was mounted atop reactor 110. This vessel had a gas volume of 68 liters (2.41 ft³), more than doubling the gas volume of the reactor. Gas was continually recirculated through both the reactor and disengager via a blower 130, so that the gas composition was homogeneous throughout.

The reactor pressure in each example was 2.41 MPa except for Example 7, in which the reactor pressure was 2.1 MPa. Ethylene monomer, hexene monomer and hydrogen (for molecular weight control) were fed to the reactor continuously via control valves through line 140. The partial pressure of ethylene monomer was 1.65 MPa in Examples 1-6 and 0.86 MPa in Example 7. Comonomer was introduced via control valves through line 150 and vaporizer 160 and its content in the polyethylene product was controlled by adjusting feed rates to maintain a constant comonomer/ monomer molar ratio (shown in the Table) in the gas phase. Gas composition was measured at 4-6 minute intervals by a gas chromatographic analyzer. Molecular weight of the polyethylene was controlled by adjusting the hydrogen feed rate to maintain a constant mole ratio of hydrogen to monomer in the gas phase. Nitrogen made up the majority of the balance of the composition of the gas in the reactor, entering with the catalyst composition through line 170 and leaving via a small vent 180 with the reactor gases including volatilized solvents. The vent opening was adjusted via computer to maintain constant total pressure in the reactor.

The reactor was cooled by an external jacket of chilled glycol. The bed temperature was measured with a temperature probe in a thermowell protruding into the bed at a 60° angle below horizontal, between the inner set of plows. The reactor temperature in Examples 1-3 and 5-7 was 85° C, while the reactor temperature in Example 4 was 65 °C.

Solutions of various catalysts were prepared by mixing Catalyst A and/or Catalyst B in dichloromethane and storing the resulting solutions in a reservoir connected to line 190. The Table shows the ratios of Catalyst A to Catalyst B used in each example. The solutions of catalyst were metered in shots via line 190 and mixed with a continuous stream of methylaluminoxane cocatalyst solution introduced via line 200. The concentration of MMAO in isopentane was 7.23 % and the amount of the MMAO used was such that the Al/Zr ratio in the reactor was 1000. In each example, the mixture of catalyst and MMAO solutions were fed through a coil 210 of 0.32 cm (1/8") tubing where the catalyst and the cocatalyst reacted for 2-10 minutes. Upon leaving this precontact coil, the mixed solution of catalyst compostion was sprayed into the reactor by a constant flow of nitrogen.

The reactor was run in both continuous and batch moles. Typical batch yields of granular polyethylene in the reactor were 9.07 to 11.34 Kg (20-25 lbs), with 13.61 to 15.87 Kg (30-35 lbs) being the upper limit. Each run typically lasted 3-6 hours. In continuous mode, granular polymer was withdrawn at 220 in typically 0.18 Kg (0.4 lb) portions while the polymerization was in progress. In the continuous mode, the product discharge system was enabled after the bed weight built to 6.80 to 11.34 Kg (15-25 lbs), and the rate of discharge was altered to maintain constant bed weight.

In each of Examples 1-7, the polymerization process was begun by charging the monomers to the reactor and adjusting the feeds until the desired gas composition was reached. An initial charge of cocatalyst was added prior to starting catalyst feeding in order to scavenge any poisons present in the reactor. After catalyst feed started, the monomers were added to the reactor in amounts sufficient to maintain gas concentrations and ratios. As the catalyst inventory built up, the polyethylene production rate increased to 2.27 to 4.54 (5-10 lbs/hr), at which point the catalyst feed was adjusted to maintain a constant polyethylene production rate. Cocatalyst feed rate was maintained in proportion to the catalyst feed rate. After the desired batch weight was made, the reactor was quickly vented, and monomers were purged from the polyethylene resin with nitrogen. The batch was then discharged through valve 220 to the open atmosphere.

### Determination of Molecular Weights, Molecular Weight Distributions, and Long Chain Branching

Samples of the polyethylene produced in each of Examples 1-7 were measured for molecular weight, PDI and extent of long chain branching. The results are shown in the Table.

A Waters 150-C liquid chromatograph equipped with gel permeation chromatographic (GPC) columns was used to measure the molecular weights of each sample and a Viscotek 150R viscometer was employed to measure the viscosity of each sample. The gel permeation chromatograph provided the molecular weight distributions of the polyethylene samples, while the viscometer, along with the GPC infrared detector, measured the concentrations and determined viscosities. Size exclusion chromatography (SEC) was performed in a 25 cm long preliminary column (Polymer Labs) having a 50 A nominal pore size, followed by a 25 cm long Shodex® A-80M/S (Showa Denko K.K.) column with 80 Å nominal pore size were used. 1,2,4-trichlorobenzene was used as the solvent and the chromatographic elutent. All measurements were made at a temperature of 140 ± 0.5 °C. Data reduction was performed using software proprietary to Union Carbide Chemicals and Plastics Company Inc.

Using the methodology and calculations found in "Determination of Long-Chain Branching Distributions of Polyethylenes," Mirabella, F. M., Jr.; and Wild, L., *Polymer Characterization*, *Amer*. *Chem*. *Soc*. *Symp*. *Ser.*, 227, 23(1990), the GPC and viscosity data was used to calculate the extent of long chain branching in each of the samples. As outlined in the Mirabella et al. article, measurement of the lower limiting viscosity (intrinsic viscosity) of polyethylene containing long chain branches as a function of molecular weight, and comparison of the results to the corresponding data measured for the same quantity of a linear polyethylene provides an estimate of the number of long chain branches in the branched polyethylene.

### Determination of Strain Hardening

Further samples of the polyethylene of Examples 1-7 were tested for strain hardening levels.

Each sample was prepared first by compression molding loose polyethylene resin into a plaque 1.52 mm thick. In order to relax any stresses or orientation in the polymer, the sample was compressed for several hours at 180°C to 1.27 mm thickness under vacuum. An annular section was punched out 1 cm across, and the difference between inner and outer diameters for each sample was 2.54 mm.

Evidence of strain hardening in each sample was determined by measuring extensional viscosity, which was calculated as the quotient between the extensional stress and the extension rate of the sample. Each sample was placed between two hook clamps, which were attached to a commercial servo-controlled tensile machine modified for handling molten samples. One clamp moved relative to the other at programmed speeds. The apparatus was capable of developing up to 50.8 cm (200 inches) per minute controlled crossed-head speed with a displacement of 50.8cm (20 inches). Special clamping was incorporated to allow a 0-500 grams load cell to be used for the tensile stress measurement.

Each sample was heated in a hot oil bath to 150°C before stretching. To establish a constant extensional deformation rate, an exponentially increasing stretching speed was needed, and this was achieved electronically using a signal generator. Each sample maintained a fairly uniform cross-section during stretching.

The polyethylene samples from Examples 1, 2, 3, and 6 exhibited strain hardening. The polyethylene samples from Examples 4 and 7 did not show strain hardening. The polyethylene sample from Example 5 was unsuitable for testing because of its low molecular weight.

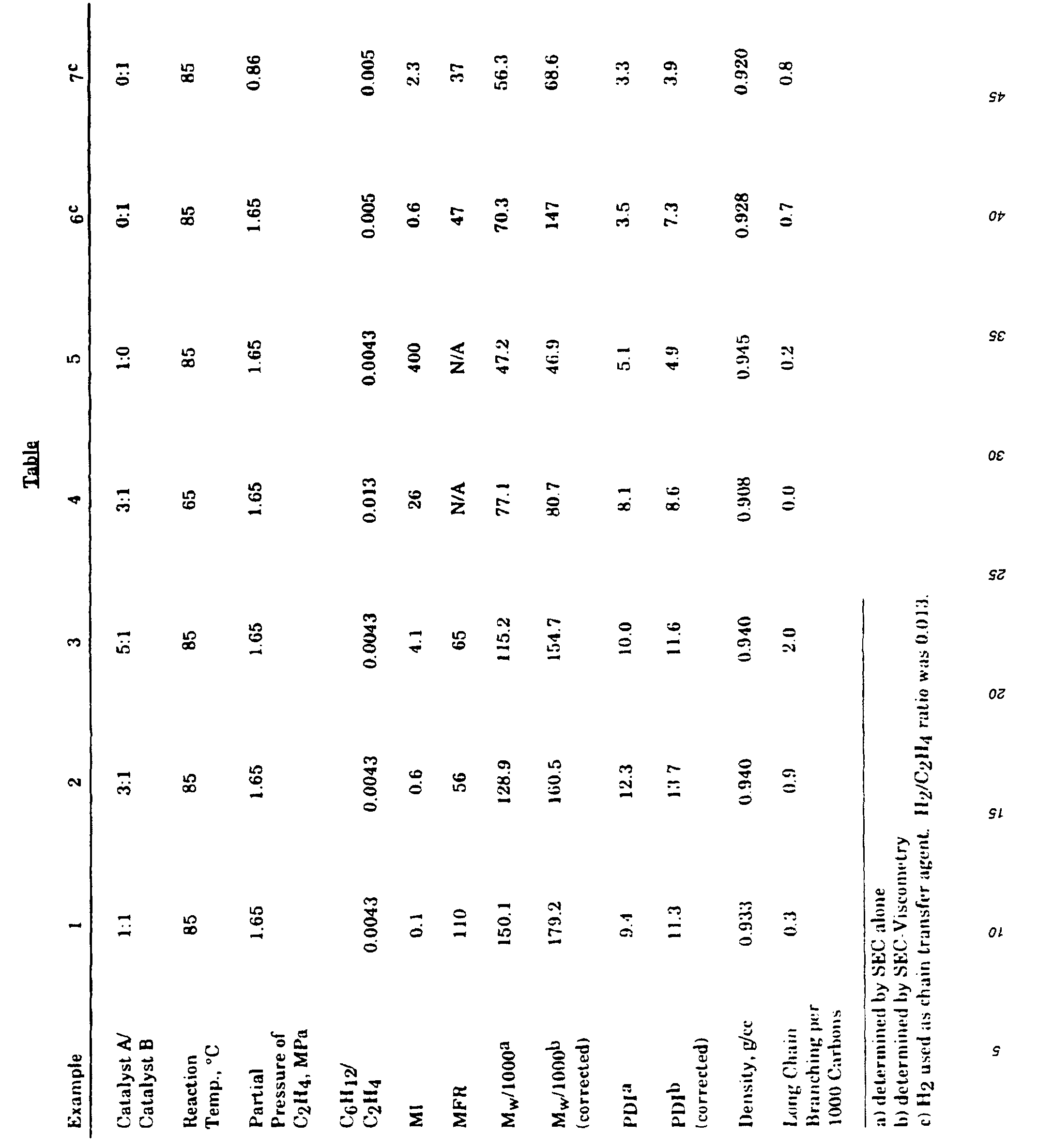

The data in the Table show that use of one or more bridged metallocene catalysts coupled with reaction temperatures above 65 °C in a gas phase process produces polyethylene having varying degrees of long chain branching Moreover, when two bridged metallocene catalysts are employed in the catalyst composition, the level of long chair branching can be controlled by varying the relative amounts of the two bridged metallocene catalysts. In particular, Examples 1 through 3 showed a trend to higher levels of long chain branching as the ratio of Catalyst A to Catalyst E was raised. Catalyst A evidently increased the relative level of vinyl terminated polymer molecules (note the increase in melt index), which produced a high density of vinyl chain ends per unit volume. These vinyl chain ends were copo lymerized with ethylene and 1-hexene by Catalyst B to form polyethylene containing long-chain branches.

Example 4, which was run under conditions similar to Example 2 except for a lower reaction temperature, shows that lowering the reaction temperature reduces the level of long chain branching.

Example 7 shows that changing the ethylene partial pressure has essentially no effect on the level of long chain branching.

Other embodiments of the invention will be apparent to those skilled in the art from a consideration of this specification or practice of the invention disclosed herein. It is intended that the specification and examples be considered as exemplary only, with the true scope and spirit of the invention being indicated by the following claims.

## Claims

1. A process for producing polyethylene comprising:
contacting ethylene and optionally a higher alpha-olefin monomer containing 3 to 8 carbon atoms under polymerization conditions in the gas phase and at a temperature above 65°C, with an unsupported catalyst composition comprising, in solution:
a) a bridged metallocene catalyst having at least two cyclic pi-bonded moieties in association with a metal atom, said cyclic pi-bonded moieties being joined together via a bridging linkage one or two atoms long; and
b) an activating cocatalyst:
wherein the polyethylene produced contains a main chain and an average of up to 3 long chain branches per 1000 carbon atoms in the main chain, each branch being at least 18 carbon atoms in length, provided that the sole bridged metallocene catalyst is not diphenylmethylene (cyclopentadienyl)(fluorenyl) zirconium dichloride/lithium chloride.

2. The process of claim 1, wherein said bridged metallocene catalyst has the formula 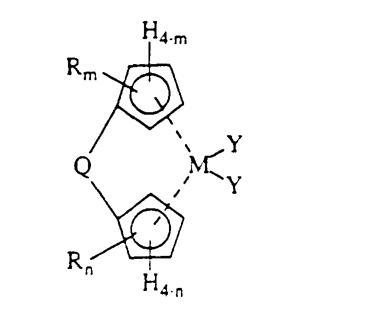 wherein:
Q is a bridging linkage selected from
R'₂C〈, R'₂Si〈, R'₂Ge〈, and -C₂R'₄-
wherein each R' moiety is independently H or an alkyl group, or two R' moieties are joined to form a ring;
each R moiety is independently an alkyl, cycloalkyl, alkenyl, cycloalkenyl, phenyl, alkyl-substituted phenyl, or a phenyl-substituted alkyl group, or two adjacent R groups on a given ring are joined to form a ring;
m is 0, 1, 2, 3, or 4;
n is 0, 1, 2, 3, or 4;
M is a Ti, Zr, or Hf atom; and
each Y is independently H, an alkyl group, or a halogen atom.

3. The process of claim 2, wherein the sum of m and n is an integer from 2 to 6.

4. The process of claim 2, wherein M is Zr.

5. The process of claim 1, wherein the catalyst composition contains dimethylsilylbis(cyclopentadienyl)zirconium dichloride and diphenylmethylene(cyclopentadienyl)(fluorenyl)zirconium dichloride as bridged metallocene catalysts.

6. The process of claim 1, wherein the cocatalyst is methylaluminoxane or modified methylaluminoxane.

7. The process of claim 1, wherein said catalyst composition further comprises a second catalyst of the formula:
(C₅Rₙ)_{y}(C₅Rₘ)MY'_{(x-y-1)}
wherein M is a metal from groups IIIB to VIII of the Periodic Table; (C₅Rₙ) and (C₅Rₘ) are the same or different and are cyclopentadienyl or substituted cyclopentadienyl groups bonded to M; each R is the same or different and is hydrogen or a hydrocarbyl radical such as alkyl, alkenyl, aryl, alkylaryl, or arylalkyl radical containing from 1 to 20 carbon atoms, or two carbon atoms are joined together to form a C₄-C₆ ring; each Y' is a hydrocarbyl radical such as aryl, alkyl, alkenyl, alkylaryl, or arylalkyl radical having from 1-20 carbon atoms, hydrocarboxy radical having from 1-20 carbon atoms, or halogen; n and m are each 0, 1, 2, 3, or 4; y is 0, 1, or 2; x is 1, 2, 3, or 4; and x-y ≥ 1.

8. The process of claim 1, wherein said catalyst composition further comprises a Ziegler-Natta catalyst containing a metal from groups IV(B), V(B), or VI(B) of the Periodic Table.

## Patentansprüche

1. Verfahren zur Herstellung von Polyethylen, umfassend:
Kontaktieren von Ethylen und gegebenenfalls einem höheren α-Olefin-Monomer, das 3 bis 8 Kohlenstoffatome enthält, unter Polymerisationsbedingungen in der Gasphase und bei einer Temperatur oberhalb von 65°C mit einer nicht-geträgerten Katalysator-Zusammensetzung, welche in Lösung umfaßt:
a) einen verbrückten Metallocen-Katalysator mit mindestens zwei cyclischen π-gebundenen Einheiten in Verbindung mit einem Metallatom, wobei diese cyclischen π-gebundenen Einheiten über eine Brücken-Verknüpfung, die ein oder zwei Atome lang ist, miteinander verbunden sind; und
b) einen aktivierenden Cokatalysator;
worin das hergestellte Polyethylen eine Hauptkette und durchschnittlich bis zu 3 Langkettenverzweigungen pro 1000 Kohlenstoffatome in der Kette enthält, wobei jeder Zweig eine Länge von mindestens 18 Kohlenstoffatomen aufweist, mit der Maßgabe, daß der alleinige verbrückte Metallocen-Katalysator nicht Diphenylmethylen(cyclopentadienyl)(fluorenyl)zirkoniumdichlorid/Lithiumchlorid ist.

2. Verfahren nach Anspruch 1, in welchem der verbrückte Metallocen-Katalysator die Formel 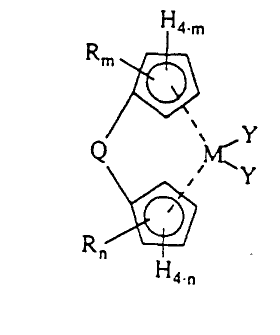 aufweist, worin:
Q eine Brücken-Verknüpfung ist, die ausgewählt ist aus
R'₂C〈, R'₂Si〈, R'₂Ge〈 und -C₂R'₄-
worin jede Einheit R' unabhängig H oder eine Alkylgruppe darstellt oder zwei Einheiten R' unter Bildung eines Ringes verbunden sind;
jede Einheit R unabhängig eine Alkyl-, Cycloalkyl-, Alkenyl-, Cycloalkenyl-, Phenyl-, Alkyl-substituierte Phenyl- oder eine Phenyl-substituierte Alkylgruppe bedeutet oder zwei benachbarte Gruppen R an einem gegebenen Ring unter Bildung eines Ringes verbunden sind;
m 0, 1, 2, 3 oder 4 ist;
n 0, 1, 2, 3 oder 4 ist;
M ein Ti-, Zr- oder Hf-Atom darstellt; und
jedes Y unabhängig H, eine Alkylgruppe oder ein Halogenatom ist.

3. Verfahren nach Anspruch 2, in welchem die Summe von m und n eine ganze Zahl von 2 bis 6 ist.

4. Verfahren nach Anspruch 2, in welchem M für Zr steht.

5. Verfahren nach Anspruch 1, in welchem die Katalysator-Zusammensetzung Dimethylsilylbis(cyclopentadienyl)zirkoniumdichlorid und Diphenylmethylen(cyclopentadienyl)(fluorenyl)zirkoniumdichlorid als verbrückte Metallocen-Katalysatoren enthält.

6. Verfahren nach Anspruch 1, in welchem es sich bei dem Cokatalysator um Methylaluminoxan oder modifiziertes Methylaluminoxan handelt.

7. Verfahren nach Anspruch 1, in welchem die Katalysator-Zusammensetzung weiter einen zweiten Katalysator mit der Formel:
(C₅Rₙ)_{y}(C₅Rₘ)MY'(x-y-1)
umfaßt, in welcher M ein Metall aus den Gruppen IIIB bis VIII des Periodensystems darstellt; (C₅Rₙ) und (C₅Rₘ) gleich oder verschieden sind und Cyclopentadienyl- oder substituierte Cyclopentadienylgruppen, die an M gebunden sind, darstellen; jedes R gleich oder verschieden ist und Wasserstoff oder einen Kohlenwasserstoffrest, wie beispielsweise Alkyl-, Alkenyl-, Aryl-, Alkylaryl- oder Arylalkyl-Rest, der 1 bis 20 Kohlenstoffatome enthält, bedeutet oder zwei Kohlenstoffatome unter Bildung eines C₄-C₆-Ringes miteinander verbunden sind; jedes Y ein Kohlenwasserstoffrest, wie beispielsweise Aryl-, Alkyl-, Alkenyl-, Alkylaryl- oder Arylalkyl-Rest mit 1 - 20 Kohlenstoffatomen, Hydrocarboxy-Rest mit 1 - 20 Kohlenstoffatomen oder Halogen ist; n und m jeweils 0, 1, 2, 3 oder 4 sind; y 0, 1 oder 2 ist; x 1, 2, 3 oder 4 ist; und x - y ≥ 1.

8. Verfahren nach Anspruch 1, in welchem die Katalysator-Zusammensetzung weiter einen Zlegler-Natta-Katalysator umfaßt, der ein Metall aus den Gruppen IV(B), V(B) oder VI(B) des Periodensystems enthält.

## Revendications

1. Procédé pour la production de polyéthylène, comprenant :
la mise en contact d'éthylène et, facultativement, d'un monomère alpha-oléfinique supérieur contenant 3 à 8 atomes de carbone dans des conditions de polymérisation en phase gazeuse et à une température supérieure à 65°C, avec une composition de catalyseur non fixée sur un support, comprenant, en solution :
a) un catalyseur à base de métallocène ponté ayant au moins deux groupements cycliques à liaisons pi en association avec un atome d'un métal, lesdits groupements cycliques à liaisons pi étant joints les uns aux autres par une liaison de pontage longue d'une ou deux atomes ; et
b) un cocatalyseur activateur :
dans lequel le polyéthylène produit contient une chaîne principale et un nombre moyen allant jusqu'à 3 ramifications à chaîne longue pour 1000 atomes de carbone dans la chaîne principale, chaque ramification étant longue d'au moins 18 atomes de carbone, sous réserve que le seul catalyseur à base de métallocène ponté ne consiste pas en dichlorure de diphénylméthylène-(cyclopentadiényl) - (fluorényl)zirconium/chlorure de lithium.

2. Procédé suivant la revendication 1; dans lequel le catalyseur à base de métallocène ponté répond à la formule 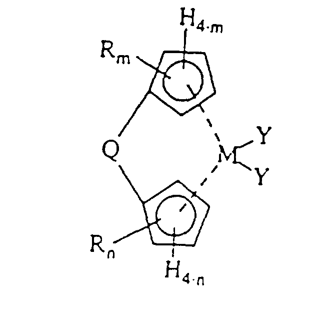 dans laquelle :
Q représente une liaison de pontage choisie entre
R'₂C〈, R'₂Si〈, R'₂Ge〈, et -C₂R'₄-
formules dans lesquelles chaque groupement R' représente, indépendamment, H ou un groupe alkyle, ou bien deux groupements R' sont joints pour former un noyau ;
chaque groupement R représente, indépendamment, un groupe alkyle, cycloalkyle, alcényle, cycloalcényle, phényle, phényle à substituant alkyle ou alkyle à substituant phényle, ou bien deux groupes R adjacents sur un noyau donné sont joints pour former un noyau ;
m est égal à 0, 1, 2, 3 ou 4 ;
n est égal à 0, 1, 2, 3 ou 4 ;
M représente un atome de Ti, Zr ou Hf ; et
chaque groupe Y représente, indépendamment, H, un groupe alkyle ou un atome d'halogène.

3. Procédé suivant la revendication 2, dans lequel la somme de m et n est égale à un nombre entier de 2 à 6.

4. Procédé suivant la revendication 2, dans lequel M représente Zr.

5. Procédé suivant la revendication 1, dans lequel la composition de catalyseur contient du dichlorure de diméthylsilylbis(cyclopentadiényl)zirconium et du dichlorure de diphénylméthylène(cyclopentadiényl)-(fluorényl)zirconium comme catalyseurs à base de métallocènes pontés.

6. Procédé suivant la revendication 1, dans lequel le cocatalyseur consiste en méthylaluminoxane ou méthylaluminoxane modifié.

7. Procédé suivant la revendication 1, dans lequel la composition de catalyseur comprend en outre un second catalyseur de formule :
(C₅Rₙ)_{y}(C₅Rₘ)MY'_{(x-y-1)}
dans laquelle M représente un métal des Groupes IIIB à VIII du Tableau Périodique ; (C₅Rn) et (C₅Rm) sont identiques ou différents et représentent des groupes cyclopentadiényle ou cyclopentadiényle substitués liés à M ; les groupes R sont identiques ou différents et représentent chacun l'hydrogène ou un radical hydrocarbyle tel qu'un radical alkyle, alcényle, aryle, alkylaryle ou arylalkyle contenant 1 à 20 atomes de carbone, ou bien deux atomes de carbone sont joints l'un à l'autre pour former un noyau en C₄ à C₆ ; chaque radical Y' représente un radical hydrocarbyle tel qu'un radical aryle, alkyle, alcényle, alkylaryle ou arylalkyle ayant 1 à 20 atomes de carbone, un radical hydrocarboxy ayant 1 à 20 atomes de carbone ou un halogène ; n et m sont chacun égaux à 0, 1, 2, 3 ou 4 ; y est égal à 0, 1 ou 2 ; x est égal à 1, 2, 3 ou 4 et x-y ≥ 1.

8. Procédé suivant la revendication 1, dans lequel la composition de catalyseur comprend en outre un catalyseur de Ziegler-Natta contenant un métal des Groupes IV(B), V(B) ou VI(B) du Tableau Périodique.
